Europäisches Patentamt

European Patent Office

Office européen des brevets

(19)

(11) EP 0 815 411 B1

(12) EUROPÄISCHE PATENTSCHRIFT

(45) Veröffentlichungstag und Bekanntmachung des Hinweises auf die Patenterteilung:
08.12.1999 Patentblatt 1999/49

(51) Int Cl.6: **G01B 11/24**, G01B 9/023, G01B 9/04

(21) Anmeldenummer: 96903862.9

(22) Anmeldetag: 06.03.1996

(86) Internationale Anmeldenummer:
PCT/CH96/00078

(87) Internationale Veröffentlichungsnummer:
WO 96/29570 (26.09.1996 Gazette 1996/43)

(54) **VERFAHREN UND VORRICHTUNG ZUR BESTIMMUNG DREIDIMENSIONALER STRUKTUREN IM SUBMIKROMETERBEREICH**

PROCESS AND DEVICE FOR DETERMINING THREE-DIMENSIONAL STRUCTURES IN THE SUBMICRON RANGE

PROCEDE ET DISPOSITIF DE DETERMINATION DE STRUCTURES TRIDIMENSIONNELLES DE L'ORDRE DU SUBMICRON

(84) Benannte Vertragsstaaten:
**CH DE FR GB IT LI NL**

(30) Priorität: **17.03.1995 CH 76595**

(43) Veröffentlichungstag der Anmeldung:
**07.01.1998 Patentblatt 1998/02**

(73) Patentinhaber: **Weber, Heinz Paul, Prof. Dr.**
**CH-3122 Kehrsatz (CH)**

(72) Erfinder:
• **WEBER, Heinz, Paul**
  **CH-3122 Kehrsatz (CH)**
• **HODEL, Walter**
  **CH-3626 Hünibach (CH)**
• **ROMANO, Valerio**
  **CH-4500 Solothurn (CH)**

(74) Vertreter:
**Roshardt, Werner Alfred, Dipl.-Phys. et al**
**Keller & Partner**
**Patentanwälte AG**
**Zeughausgasse 5**
**Postfach**
**3000 Bern 7 (CH)**

(56) Entgegenhaltungen:
WO-A-90/02930       GB-A- 2 113 848
US-A- 5 194 918

• **APPLIED OPTICS, Bd. 28, Nr. 20, 15.Oktober 1989, Seiten 4323-4327, XP000071270 QIFENG YU: "FRINGE MULTIPLICATION METHODS FOR DIGITAL INTERFEROMETRIC FRINGES"**
• **LASER UND OPTOELEKTRONIK, Bd. 26, Nr. 5, Oktober 1994, STUTTGART DE, Seiten 40-45, XP000469660 ULF SCHNARS: "DIGITALE HOLOGRAFIE- EIN NEUES VERFAHREN DER LASERMESSTECHNIK" in der Anmeldung erwähnt**
• **OPTICAL ENGINEERING, Bd. 33, Nr. 8, August 1994, BELLINGHAM US, Seiten 2754-2758, XP000462289 TAKAMASA SUZUKI E.A.: "REAL-TIME TWO-DIMENSIONAL SURFACE PROFILE MEASUREMENT IN A SINUSOIDAL PHASE-MODULATING LASER DIODE INTERFEROMETER"**
• **OPTICS COMMUNICATIONS, Band 74, Nr. 1/2; 1. Dezember 1989, Seiten 37 bis 40; V.P. Tychinsky et al.: "Computerized Phase Microscope for Investigation of Submicron Structures"**

**Beschreibung**

Die Erfindung betrifft ein Verfahren gemäß dem Oberbegriff des Patentanspruchs 1 und eine Vorrichtung gemäß dem Patentanspruch 8. Strukturen im Submikrometerbereich werden z. B. mit Rasterkraftmikroskopen ausgemessen, wobei das auszumessende Objekt im Submikrometerbereich durch eine Servoeinrichtung verschoben und die Oberflächenstruktur des Meßobjekts mit einer feinen Meßspitze abgetastet wird. Die hierbei zu verwendenden feinen Meßspitzen werden nun häufig beschädigt und führen somit zu ungewollten Betriebsunterbrüchen. Zudem sind die durch die feine Spitze auf die Objektoberfläche wirkenden Kräfte im Bereich von 0,1 bis $1.10^{-9}$ Newton. Diese kleinen Kräfte können bereits zu Ortsveränderungen am Meßobjekt führen.

Der Artikel von V.P. Tychinsky et al.: "Computerized Phase Microscope for Investigation of Submicron Structures" aus OPTICS COMMUNICATIONS, Band 74, Nr. 1/2, 1. Dezember 1989, beschreibt ein Linnik-Mikroskop, bei dem ein kohärenter Lichtstrahl eines Lasers mittels einem Strahlteiler geteilt wird. Ein erster Teilstrahl wird auf einen im Wellenlängenbereich der Strahlung liegenden Fokusdurchmesser auf das auszumessende Objekt fokussiert, nach Reflexion mit dem zweiten Teilstrahl zur Interferenz gebracht und das Interferogramm mit einem Detektor aufgenommen. In einer Auswerteeinheit werden die komplexen Amplitudenwerte ermittelt, um das Profil des Objektes bildlich darzustellen.

Aufgabe der Erfindung ist es, ein Verfahren und eine Vorrichtung zu schaffen, welche ein die Oberfläche des auszumessenden Objekts abtastendes mechanisches Element nicht mehr benötigt.

Bei der Erfindung wird nun im Gegensatz zu den optischen Mikroskopen keine Strahlenoptik betrieben, sondern die von einem auszumessenden Objekt ausgehende räumliche und zeitliche komplexe Amplitude (Intensitäts- und Phasenwinkelverteilung) bestimmt und verarbeitet.

Unter unterschiedlichen Strahlzuständen der beiden Teilstrahlen werden Zustände verstanden, welche an den Orten der Detektoren auf dem Detektorfeld unterschiedliche, durch Überlagerung der beiden Teilstrahlen entstandene Strahlungsfelder erzeugen. Der Phasenwinkel dieser unterschiedlichen Strahlungsfelder unterscheidet sich an ein- und demselben Detektorort um unterschiedliche Bruchteile einer vollen Wellenschwingung. Aus bevorzugt wenigstens drei Messungen an ein- und demselben Ort läßt sich dann Amplitude und Phase des Überlagerungsfeldes eindeutig bestimmen. Da einer der Teilstrahlen vom auszumessenden Objekt kommt, enthält das nun ausgemessene Überlagerungsstrahlungsfeld die Information der Struktur des Objekts.

Unterschiedliche Strahlzustände lassen sich nun, wie unten ausgeführt, z. B. innerhalb einer Schwebungsperiode eines Frequenzschwebungszustands der beiden, eine geringfügig unterschiedliche Strahlungsfrequenz aufweisende Teilstrahlen erzeugen. Es kann aber auch ein Teilstrahl gegenüber dem anderen um Wellenlängenbruchteile relativ verzögert sowie seine Strahlkonfiguration verändert werden. Eine Verzögerung kann z. B. mit elektro-optischen, akusto-optischen, magneto-optischen Baueinheiten, mechanischen Verschiebeelementen, etc. vorgenommen werden.

Es werden wenigstens drei Messungen pro Ort zur Phasenbestimmung vorgenommen. Es kann aber auch mit weniger Messung ausgekommen werden, wenn die Messungen benachbarter Detektoren miteinander verglichen und in Relation gesetzt werden.

Ein Arbeiten mit räumlicher Intensitäts- und Phasenwinkelverteilung ist aus der Holographie bekannt. Bei dem erfindungsgemäßen Meßverfahren zur Ermittlung der vergrößerten Objektstrukturen wird nun nicht eine mittels eines Referenzstrahls erzeugte Interferenzstruktur betrachtet, sondern punktweise die komplexe Amplitude bestimmt. Aus dieser komplexen Amplitude werden dann die hierzu gehörenden Phasenwinkelwerte rechnerisch aus den Meßwerten ermittelt. Die Phasenwerte werden durch einen die Vergrößerung bestimmenden Multiplikationsfaktor überhöht. Mit diesen erhöhten Phasenwerten und den Realteilen der gemessenen ursprünglichen komplexen Amplitude wird eine zweite komplexe Amplitude ermittelt, aus der dann mit den Ortskoordinaten der Detektoren eine vergrößerte Struktur des Meßobjekts (als z. B. Hologramm) ermittelbar ist, welche dann (nach weiteren rechnerischen Überarbeitungen) mittels eines Plotters oder eines anderen Abbildungsgeräts darstellbar ist.

In bevorzugter Weise wird bei der Bestimmung der Phasenwinkelwerte der komplexen Amplitude mit der von der auszumessenden Struktur des Meßobjekts rückgesandten Strahlung mit sich überlagernden Strahlen gearbeitet, welche eine niederfrequente Schwebungsfrequenz aufweisen. Die verwendbare Schwebungsfrequenz richtet sich u. a. nach der Geschwindigkeit des Abspeicherzyklus für die aus den Detektoren des Detektorfeldes ausgelesenen Werte der einzelnen Detektoren.

Im folgenden werden Beispiele des erfindungsgemäßen Verfahrens sowie der Vorrichtung zur Durchführung des Verfahrens anhand von Zeichnungen näher erläutert. Weitere Vorteile der Erfindung ergeben sich aus dem nachfolgenden Beschreibungstext. Es zeigen:

Fig. 1      ein Blockschaltdiagramm der Vorrichtung,

Fig. 2      ein zur Berechnung der Überlagerung ebener Wellen verwendetes Koordinatensystem,

Fig. 3    eine Darstellung zur Berechnung von Phasenbeziehungen ebener und sphärischer Wellen, wie sie sich ausgehend von Punkten in der Umgebung des Fokuspunkts einer Linse ergeben, und

Fig. 4    eine Darstellung zur Fehlerabschätzung bei der Berechnung der transversalen Auflösung.

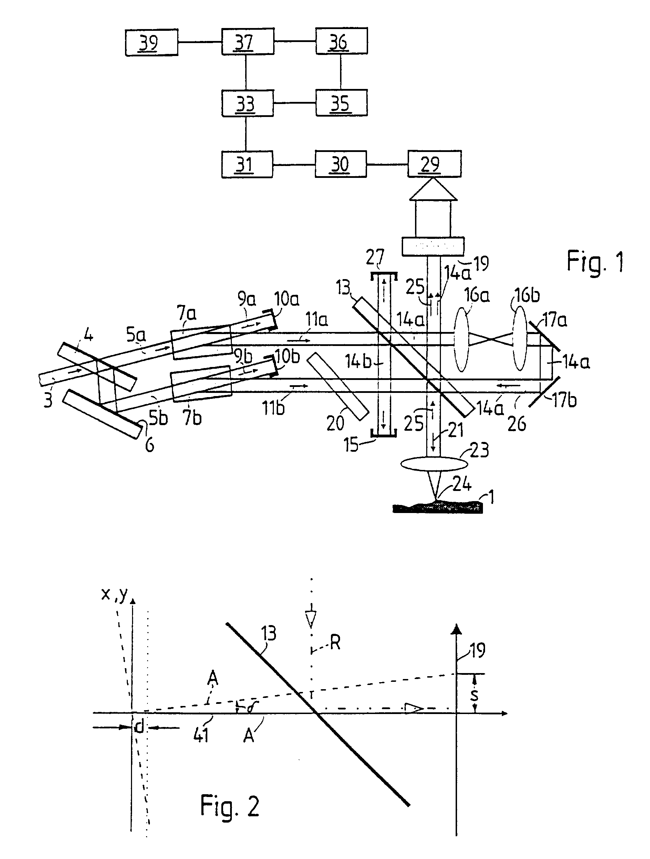

Die in **Figur 1** dargestellte Vorrichtung zur Bestimmung dreidimensionaler Strukturen im Submikrometerbereich eines Objekts **1** arbeitet mit kohärenter Strahlung, bevorzugt kohärenter Laserstrahlung. Der kohärente Strahl **3**
wird mit einem Strahlteiler **4** in zwei Teilstrahlen **5a** und **5b** aufgeteilt. Durch einen Umlenkspiegel **6** wird der Teilstrahl
**5b** parallel zum Teilstrahl **5a** gerichtet. Beide Teilstrahlen **5a** und **5b** durchlaufen anschließend je ein Element **7a** und
**7b** zur Verschiebung ihrer Strahlungsfrequenz. Die Frequenzverschiebung wird mit je einem akusto-optischen Modulator **7a** bzw. **7b** erreicht. Die akustischen Modulationsfrequenzen der beiden Modulatoren **7a** und **7b** unterscheiden
sich hier beispielsweise um einhundert Hertz, d. h. die Strahlungsfrequenzen der beiden Strahlen $f_a$ und $f_b$ sind um
einhundert Hertz gegeneinander verschoben. Der jeweils im akusto-optischen Modulator **7a** bzw. **7b** durch die Dichtewelle der Modulationsfrequenz nicht abgelenkte transmittierte Strahl **9a** bzw. **9b** wird in einem Absorber **10a** bzw.
**10b** absorbiert. Nur die abgelenkten Strahlen **11a** und **11b** mit den Frequenzen $f_a$ und $f_b$ werden weiter verarbeitet.
Bevorzugt wird jedoch unter dem Braggwinkel eingestrahlt, so daß nahezu die gesamte Strahlungsenergie in die erste
abgelenkte Ordnung fällt.

Der Strahl **11a** trifft nun auf einen weiteren Strahlteiler **13**. Ein erster Strahlteil **14a** des Strahls **11a** transmittiert
diesen Strahlteiler **13** und der zweite, andere Teil **14b** wird reflektiert und in einem Absorber **15** aufgefangen. Der
Teilstrahl **14a** durchläuft zwei konfokal angeordnete identische Linsen **16a** und **16b** und wird nach einer versetzten
Rückreflexion durch die beiden Spiegel **17a** und **17b** auf den Strahlteiler **13** gesandt und von diesem auf das Detektorfeld **19** einer CCD-Kamera reflektiert.

Der Strahl **11b** durchläuft eine zur Strahlachse geneigte planparallele, zum Strahlteiler **13** parallel angeordnete Platte **20** und trifft auf den Strahlteiler **13** auf dessen Rückseite am gleichen Ort wie der durch die beiden Spiegel
**17a** und **17b** umgelenkte Strahl **14a** auf. Hier wird ein erster Strahlteil **21** des Strahls **11b** reflektiert und mit einer Linse
**23** auf das Objekt **1** im Ort **24** fokussiert. Der Fokusdurchmesser liegt je nach verwendeter Laserstrahlung geringfügig
unter einem Mikrometer. Vom Ort **24** wird nun die Strahlung **25** zurückgestreut, gemäß untenstehenden Ausführungen
mehr oder weniger mit der Fokussierlinse **23** in eine ebene Welle verwandelt, transmittiert den Strahlteiler **13** und
überlagert sich mit dem Strahl **14a** auf dem Detektorfeld **19**.

Ein hier nicht weiter zu betrachtender Strahlteil des Strahls **11b** transmittiert als Strahl **26** den Strahlteiler **13**,
wird von den beiden Spiegeln **17b** und **17a** umgelenkt, transmittiert die beiden Linsen **16b** und **16a**, wird am Strahlteiler
**13** reflektiert und dann vom Absorber **27** absorbiert.

Auf dem Detektorfeld **19** überlagern sich nun der Teilstrahl **14a** (5a - 11a) mit der Strahlfrequenz $f_a$ und der
vom Ort **24** auf dem Objekt **1** zurückgestreute Strahl **25** (5b - 11b - 21) mit der Strahlfrequenz $f_b$, welche sich von der
Frequenz $f_a$ um einhundert Hertz (Differenzkreisfrequenz $\Omega = 2\pi \cdot |f_a - f_b|$) unterscheidet.

Um eine einwandfreie Überlagerung zu erhalten, ist darauf zu achten, daß der optische Weg **I** des Teilstrahls
**5a - 11a - 14a** sowie der optische Weg **II** des Teilstrahls **5b - 11b - 21 - 25** innerhalb der Kohärenzlänge des Strahles
**3** liegen. Um eine Dispersion der Gruppengeschwindigkeiten auf den beiden Wegen **I** und **II** zu vermeiden, sind die
Weglängen durch andere Materialien als Luft - z. B. das Material der Strahlteiler **4** und **13** sowie der Linsen **16a, 16b**
und **23** - gleich lang gewählt.

Der Weg **I** weist deshalb eine (Glas-)Transmissionsdicke des Strahlteilers **4** und drei (Glas-)Transmissionsdicken des Strahlteilers **13** auf, um auf das Detektorfeld **19** zu gelangen. Der Weg **II** weist deshalb zwei (Glas-)Transmissionsdicken des Strahlteilers **4**, eine (Glas-)Transmissionsdicke der planparallelen Platte **20** und eine (Glas-)Transmissionsdicke des Strahlteilers **13** auf, um auf das Detektorfeld **19** zu gelangen. Bei identischer optischer Ausgestaltung der beiden Strahlteiler **4** und **13** sowie der Platte **20** weisen die beiden Wege **I** und **II** die gleiche Anzahl (plane
Glas-)"Transmissionsdicken" auf.

Auf dem Weg **I** werden die beiden Linsen **16a** und **16b** einmal transmittiert. Auf dem Weg **II** wird die Linse
**23** zweimal transmittiert. Bei identischer optischer Ausgestaltung der Linsen **16a, 16b** und **23** weisen die beiden Wege
**I** und **II** die gleiche Anzahl (sphärische) "Transmissionsdicken" auf. Das für die planparallele Platte **20**, die Strahlteiler
**4, 13** und für die Linsen **23, 17a** und **17b** verwendete optische Material (z. B. Glas) sollte für die verwendete (Laser-)
Strahlung annähernd gleiche optische Eigenschaften aufweisen. Eine Dispersion der Gruppengeschwindigkeit tritt
somit nicht mehr auf.

Das Detektorfeld besteht z. B. aus 1024 x 1024 CCD-Elementen, welche etwa in einem Abstand von 6,8 µm
voneinander angeordnet sind. Diese Detektoren sind mit einer Auswerteeinheit **29** verbunden, welche die Detektoren
innerhalb einer Periode der 100 Hz-Schwebungsfrequenz dreimal empfindlich schaltet, die Meßwerte ausliest und pro
Detektor in ersten Speichern **30** mit entsprechend der Anzahl Detektoren und Abtastzyklen in gut 300'000 Einzelspeichern ablegt.

Da nun pro Periode der Schwebungsfrequenz und Detektor (Ort) drei Meßwerte ausgewertet werden, kann mit einer ersten Recheneinheit **31** die komplexe Amplitude (Intensität und Phasenwinkel) an jedem der Detektoren ermittelt werden. Die komplexe Amplitude ist eine Überlagerung der vom auszumessenden Objektort reflektierten Strahlung (Strahl **25**) mit der unbeeinflußten Strahlung (Strahl **14a**). Die Strukturinformation des Objekts **1** ist in der ermittelten komplexen Amplitude enthalten.

Die nun ermittelten Phasenwinkelwerte pro Detektor werden in zweiten Speichern **33** (mit ebenfalls gut 300'000 Einzelspeichern) plus die dazugehörenden Amplitudenwerte (Intensitätswerte), welche nochmals gut 300'000 Einzelspeicher benötigen, abgespeichert. Die in den zweiten Speichern **33** abgespeicherten Phasenwinkelwerte werden mit einer Multiplikationseinheit **35** mit einem die Vergrößerung der Struktur des Ortes **24** bestimmenden Wert multipliziert und in dritten Speichern **36** abgespeichert. Mit den in den dritten Speichern **36** abgespeicherten, vergrößerten Phasenwinkelwerten und den hierzu gehörenden Intensitätswerten aus den zweiten Speichern **33** wird nun mit einer zweiten Recheneinheit **37** unter Verwendung des in dieser abgelegten Berechnungsalgorithmusses einer zweidimensionalen Fouriertransformation, wie z. B. in der Veröffentlichung von Ulf Schnars et al. "Digitale Holografie - ein neues Verfahren der Lasermeßtechnik", Laser und Optoelektronik, 26(5), 1994, S. 40 - 45 sowie in U. Schnars, "Direct phase determination in hologram interferometry with use of digital recorded holograms", J. Opt. Soc. Am. A, 11, (7), 2011 - 2015, July 1994 ausgeführt, ein Bild punktweise errechnet, welches über eine Ausgabeeinheit **39** darstellbar ist. Bei der Ausgabeeinheit **39** kann es sich nun um einen Bildschirm oder einen Plotter handeln. Das hier erzeugte Bild stellt eine Vergrößerung der im Ort **24** sich befindenden Struktur dar. Dieses Bild ist gegenüber herkömmlichen Lichtmikroskopieabbildungen nicht mehr beugungsbegrenzt. Es weist räumliche Strukturen auf.

Nachfolgend werden einige mathematische Betrachtungen aufgeführt, welche den obigen submikroskopischen Vergrößerungsvorgang erklären. Zur Erleichterung des Verständnisses wird zuerst von zwei ebenen sich in einem Punkt mit dem Abstand z überlagernden Wellenfronten **A** und **R** ausgegangen, welche sich gemäß den nachfolgenden Gleichungen (1) und (2) darstellen lassen:

$$A = A_0 \cdot \cos(wt - kz + \Phi_d) \tag{1}$$

$$R = R_0 \cdot \cos[(w+\Omega)t - kz] \tag{2}$$

$A_0$ und $R_0$ sind die jeweiligen Amplitudenwerte der Strahlung, w die Kreisfrequenz der Strahlung mit der tieferen Frequenz $f_a$ (w = $2\pi f_a$), (w+$\Omega$) die Kreisfrequenz der Strahlung mit der höheren Frequenz $f_b$, wobei $\Omega$ die Schwebungsfrequenz ist. k ist der Wellenvektor.

Der Phasenwinkel $\Phi$ einer Welle in einem Abstand d von einem Referenzort verschiebt sich somit gegenüber den Phasenwinkel an diesem Ort um

$$\Phi_d = k \cdot d. \tag{3}$$

A sei nun die von einem Ort der Struktur mit dem Abstand d von einem Referenzort ausgehende Welle und R die Referenzwelle. Für eine Überlagerung am Ort des Detektorfeldes **19**, unter Nichtberücksichtigung der Linse **23** gilt nun für die durch die Detektoren gemessene Intensität I:

$$I = (A + R)^2$$

$$I = (A_0 \cdot \cos(wt - kz + \Phi_d) + R_0 \cdot \cos[(w+\Omega)t - kz])^2$$

Die Detektoren können nun nicht der optischen Frequenz **$f_a$** bzw. **$f_b$** folgen und bilden damit von der auf sie eintreffenden Intensität den Mittelwert <I>:

$$<I> = \tfrac{1}{2}A_0^2 + \tfrac{1}{2}R_0^2 + 2A_0R_0 <\cos[wt-kz+\Phi_d] \cdot \cos[(w+\Omega)t-kz]>$$

$$<I> = \tfrac{1}{2}A_0^2 + \tfrac{1}{2}R_0^2 + A_0R_0 \cdot \cos[\Omega t - \Phi_d] \tag{4}$$

Es wird somit ein Schwebungssignal $A_0R_0 \cdot \cos[\Omega t - \Phi_d]$ erhalten, aus dem experimentell Phasenwinkelwerte mit einer Genauigkeit von $10^{-3}$ ermittelbar sind. D. h. ein Abstand **d** ließe sich gemäß der Gleichung (3) $d = 10^{-3}/k$ unter Verwendung einer Laserwellenlänge vom 500 nm zu

$$d = \frac{10^{-3}}{2\pi} \cdot 500 \ [nm] = 8 \cdot 10^{-2} \ [nm]$$

bestimmen.

Der Phasenwinkel wird nun, wie oben ausgeführt, dadurch bestimmt, daß in gleichen zeitlichen Abständen dreimal pro Schwebungsfrequenz $\Omega$ die Werte der Detektoren ausgelesen werden.

Handelt es sich bei den beiden Wellen A und R um unter einem Winkel 6 zueinander geneigte ebene Wellen, so ergibt sich in einem Abstand s von einer durch den Referenzort gehenden Referenzachse **41** analog zu den obigen Ausführungen für die Welle

$$A = A_0 \cdot \cos \ [wt - k \cdot \delta \cdot s + \Phi_d]. \tag{5}$$

Die Referenzwelle R wird nicht verändert.

$$I = (A + R)^2$$

$$I = (A_0 \cdot \cos(wt - k \cdot \delta \cdot s + \Phi_d) + R_0 \cdot \cos[(w+\Omega)t - kz])^2$$

Infolge der Mittelwertbildung der Detektoren folgt:

$$<I> = \tfrac{1}{2}A_0^{\ 2} + \tfrac{1}{2}R_0^{\ 2} + A_0 R_0 <\cos[(2w+\Omega)t - k \cdot \delta \cdot s + \Phi_d] \cdot \cos[\Omega t + k \cdot \delta \cdot s - \Phi_d]>$$

$$<I> = \tfrac{1}{2}A_0^{\ 2} + \tfrac{1}{2}R_0^{\ 2} + A_0 R_0 \cdot \cos[\Omega t + k \cdot \delta \cdot s - \Phi_d] \tag{6}$$

Die Änderung des Phasenwinkels $\Phi_{tr}$ an einem Ort mit dem Abstand s von der Referenzachse **41** (in der Detektorebene **19**) ergibt sich somit zu

$$\Phi_{tr} = k \cdot \delta \cdot s - \Phi_d. \tag{7}$$

Wird $\Phi_d = 0$ gesetzt, so folgt für die winkelabhängige Phasenverschiebung alleine

$$\delta = \frac{\Phi_{tr}}{k \cdot s} \tag{7a}$$

Es ergibt sich somit mit den obigen Annahmen bei einer Laserwellenlänge von 500 nm und einem Abstand s von 1 mm, was etwa den Randdetektoren des 1024 x 1024 CCD-Detektorfeldes entspricht, eine Auflösung von

$$\delta = \frac{10^{-3}}{2\pi} \cdot \frac{500 \ [nm]}{1 \ [mm]} = 8 \cdot 10^{-8} \tag{8}$$

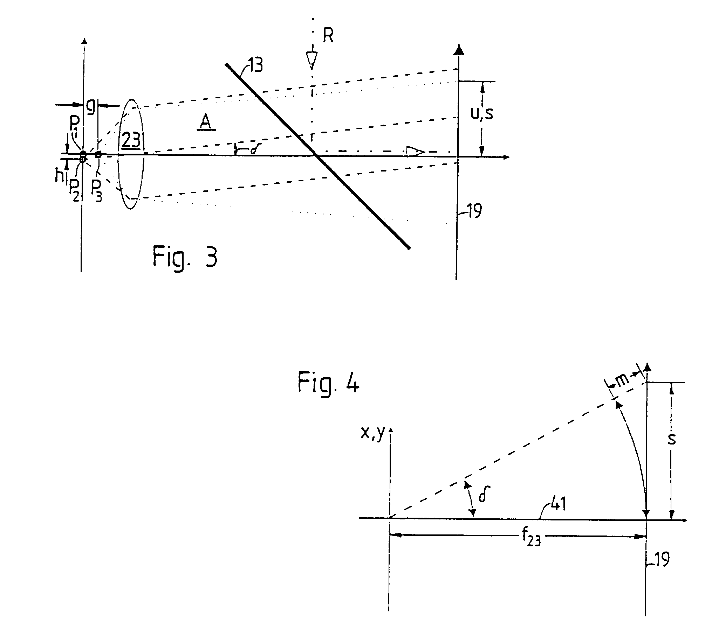

Um nun diese Winkelauflösung in eine räumliche Auflösung umzuwandeln, wird z. B. die sphärische Linse **23** mit der Brennweite **f** verwendet. Von den Punkten **P₁** und **P₂** des Objekts **1**, wie in **Figur 3** dargestellt, ausgehende Wellen werden somit in ebene Wellen transformiert. Die vom Punkt **P₁** mit den Koordinaten x = 0, y = 0 und z = 0 ausgehende Welle läßt sich analog zur obigen Gleichung (1) beschreiben durch

$$A = A_0 \cdot \cos(wt - kz) \tag{9}$$

Die von dem Punkt $P_2$ mit den Koordinaten x = -h, y = 0 und z = 0 ausgehende Welle läßt sich analog zur obigen Gleichung (5) beschreiben durch

$$A = A_0 \cdot \cos(wt - k \cdot \delta \cdot h) \tag{10}$$

Die von dem Punkt $P_3$ mit den Koordinaten x = 0, y = 0 und z = g ausgehende Welle ist nun, da $P_3$ sich nicht mehr im Fokus der Linse 23 befindet, keine ebene Welle, sondern eine sphärische Welle mit einem Abstand $z_v$ von einem virtuellen Zentrum. Dieser Abstand $z_v$ läßt sich aus der Linsengleichung bestimmen, wobei $f_{23}$ die Brennweite der Linse **23** ist:

$$\frac{1}{z_V + f_{23}} = \frac{1}{f_{23}} - \frac{1}{f_{23} - g} \approx \frac{1}{f_{23}} - \frac{1 + g/f_{23}}{f_{23}} = \frac{-g}{f^2_{23}} \tag{11}$$

bzw.

$$z_V = \frac{-f^2_{23}}{g} - f_{23} \approx \frac{-f^2_{23}}{g} \tag{12}$$

Für $g \rightarrow 0$, d. h. $P_3$ "rutscht" in die Fokusebene, geht $z_v$ gegen $\infty$ und es wird wieder eine ebene Welle erhalten. Für einen Ort **O** in der Detektorebene **19** im Abstand u ergibt sich somit eine Phasenverschiebung

$$\Phi_g = k \cdot \left( \sqrt{z_V^2 + u^2} - z_V \right) \tag{13}$$

Unter der Annahme, daß u « $z_V$ folgt

$$\Phi_g = k \cdot \left( \sqrt{z_V^2 + u^2} - z_V \right) = k \cdot \left( z_V \sqrt{1 + (u/z_V)^2} - z_V \right) =$$

$$= k \cdot \left( z_V (1 + \tfrac{1}{2}(u/z_V)^2) - z_V \right) = \frac{k \cdot z_V}{2} \cdot (u/z_V)^2 = \frac{k \cdot u^2}{2 z_V}$$

Wird in diese Gleichung Gleichung (12) eingesetzt, so folgt für die Phasenverschiebung $\Phi_g$ mit der Wellenlänge $l_W$ der Strahlung

$$\Phi_g = \frac{k \cdot u^2}{2 z_V} = \frac{-k \cdot u^2 \cdot g}{2 \cdot f^2_{23}} = \frac{-\pi \cdot u^2 \cdot g}{l_W \cdot f^2_{23}} \tag{14}$$

Werden die bereits oben verwendeten beispielsweisen Werte für u = 1 mm, was etwa den Randdetektoren des 1024 x 1024 CCD-Detektorfeldes entspricht, eine Wellenlänge 1 von 500 nm und eine Brennweite der Linse **23** von f = 2 mm eingesetzt, so folgt für die Phasenverschiebung

$$|\Phi_g| = \frac{\pi}{4} \cdot \frac{g}{l_W}$$

Da nun Phasenverschiebungen in der Größenordnung von $10^{-3}$ meßtechnisch bestimmbar sind, ergibt sich eine Auflösung von

$$g = \frac{4 \cdot l_W}{\pi} \cdot \Phi_g = 0{,}64 \text{ nm}$$

Vom gegenüber dem Punkt **P$_1$** transversal um h versetzten Punkt **P$_2$** mit den Koordinaten x = -h, y = 0 und z = 0 geht unter dem Winkel 6 nach der Fokussierlinse 23 eine ebene Welle aus. Es gilt somit

$$\delta = \frac{h}{f_{23}}$$

Mit Gleichung (7a) folgt dann

$$h = \frac{\Phi_{tr}}{k \cdot s} \cdot f_{23} = \frac{l_W \cdot \Phi_{tr} \cdot f_{23}}{2\pi \cdot s}$$

Werden die bereits oben verwendeten beispielsweisen Werte von l = 500 nm, $\Phi_{tr}$ = 10$^{-3}$, $f_{23}$ = 2 mm und s (bzw. u) = 1 mm in diese Gleichung eingesetzt, so ergibt sich eine transversale Auflösung von 0,16 nm. Diese Auflösung ist größer als die Höhenauflösung g. Dieses Ergebnis rührt lediglich von der näherungsweisen Berechnung her.

Gemäß **Figur 4** läßt sich die nachfolgende Abschätzung mit einer Brennweite von 2 mm und einem Abstand eines (Rand-) Detektors von der Referenzachse von 1 mm anstellen:

$$m = \sqrt{f^2_{23} + s^2} - f_{23} = \sqrt{2^2 + 1^2} - 2 = 0{,}23$$

Dieser Abstand m ist nun mit dem maximalen Abstand $f_{23}$ = 2 mm zu vergleichen:

$$\frac{m}{f_{23}} = \frac{0{,}23}{2} \approx 0{,}1$$

Um diesen Wert 0,1 wird die obige theoretische Auflösung verkleinert.

Aus diesen Ausführungen ist ersichtlich, daß mit dem erfindungsgemäßen Verfahren und der erfindungsgemäßen Vorrichtung Auflösungen erreichbar sind, welche wesentlich besser sind als die der optischen Mikroskope, welche durch optische Beugungseffekte begrenzt wird.

Je nach der optischen Beschaffenheit des Objekts **1** kann nun mit der aufgezeigten erfinderischen Meßmethode bzw. der erfinderischen Meßvorrichtung die Oberflächenstruktur ausgemessen oder innere räumliche bei in das Objekt 1 eindringender Strahlung bestimmt werden.

Im Gegensatz zu holografischen Meßmethoden ist die erfinderische Meßmethode nicht mehr auf detektierbare oder aufzeichenbare Interferenzen zwischen Meßstrahl und Referenzstrahl angewiesen. Durch die rechnerische Überhöhung der Phasenwinkelwerte "schafft sich das Meßverfahren die für die gewünschte Auflösung geforderten Interferenzen selbst".

Anstatt die Frequenzverschiebung der beiden Teilstrahlen **5a** und **5b** gegeneinander durch einen bzw. zwei akustooptische Modulatoren **7a** und **7b** zu erzeugen, können auch die Orte der beiden Spiegel **17a** und **17b** periodisch verändert werden. Auch können rotierend Gitter sowie auch elektro-optische Modulatoren mit einer von der angelegten Spannung abhängigen Phasenverschiebung verwendet werden.

Die Schwebungsfrequenz lfa - fbl sollte so groß wie möglich gewählt werden, damit thermische oder sonstige Weglängenänderungen zwischen den beiden Teilstrahlen 5a - 11a, 14a und 5b - 11b - 21 - 25 keine Meßwertverfälschungen ergeben. Sie wird jedoch durch die Auslese- und Abspeichergeschwindigkeit der Meßwerte aus den Detektoren sowie deren Empfindlichkeit begrenzt.

Auf den Einsatz der zweidimensionalen Fouriertransformation kann verzichtet werden. Es wird dann anstelle eines direkt betrachtbaren Bildes ein hologrammartiges Bild erzeugt, daß dann mit entsprechender kohärenter Strahlung betrachtet werden kann.

**Patentansprüche**

1. Verfahren zur Bestimmung dreidimensionaler Strukturen im Submikrometerbereich, wobei

   ein kohärenter Strahl **(3),** insbesondere ein Laserstrahl, in zwei Teilstrahlen **(5a, 11a, 14a; 5b, 11b, 21)** aufgeteilt wird,

   der erste Teilstrahl **(5b, 11b, 21)** auf ein strukturell auszumessendes Objekt **(1)** mit einem etwa eine Wellenlänge der Strahlung aufweisenden Fokusdurchmesser fokussiert wird,

   die durch die Fokussierlinse **(23)** rückreflektierte Strahlung **(25)** mit der Strahlung des zweiten Teilstrahls **(5a, 11a, 14a)** auf einem mehrere voneinander unabhängige Detektoren aufweisenden Detektorfeld (19) überlagert wird und

   die ortsabhängigen Strahlungsintensitätswerte **(<I>)** für wenigstens drei unterschiedliche Strahl zustände wenigstens eines der beiden Teilstrahlen **(5a, 11a, 14a; 5b, 11b, 21)** auf den Detektoren durch diese in analoge elektrische Signale umgewandelt und abgespeichert werden,

   aus diesen abgespeicherten Werten jeweilige komplexe Amplitudenwerte mit ersten Phasenwerten **(Φ)** des örtlichen Wellenfeldes am Ort der Detektoren bestimmt werden,

   dadurch gekennzeichnet, daß

   aus den bestimmten ersten Phasenwerten rechnerisch durch Multiplikation mit einem vorgegebenen Wert zweite Phasenwerte gebildet werden und

   mit diesen zweiten Phasenwerten, den in ersten Speichern abgespeicherten Intensitätswerten der komplexen Amplitudenwerte und den Ortskoordinaten der jeweiligen Detektoren ein hologrammartiges, die vergrößerte Objektstruktur enthaltendes Bild erzeugt wird.

2. Verfahren nach Anspruch 1, **dadurch gekennzeichnet,** daß aus der Bildinformation des hologrammartigen, die vergrößerte Objektstruktur enthaltenden Bilds unter Verwendung einer zweidimensionalen Fouriertransformation und einem vorgegebenen Rechenformalismus eine zweite Bildinformation eines direkt betrachtbaren, die vergrößerte Objektstruktur darstellenden, zweiten Bilds errechnet wird.

3. Verfahren nach Anspruch 1 oder 2, **dadurch gekennzeichnet,** daß zeitabhängige Strahlungsintensitätswerte **(<I>)** auf den Detektoren erzeugende unterschiedliche Strahlzustände ausgebildet werden.

4. Verfahren nach Anspruch 3, **dadurch gekennzeichnet,** daß für die Ausbildung unterschiedlicher Strahlzustände die Strahlungsfrequenz **($f_b$)** des ersten **(11b, 21, 25)** gegenüber derjenigen **($f_a$)** des zweiten Teilstrahls **(11a, 14a)** um einen Frequenzwert verschoben wird, der insbesondere eine Verarbeitung mit elektronischen Baugruppen erlaubt.

5. Verfahren nach Anspruch 4, **dadurch gekennzeichnet,** daß beide Teilstrahlen **(5a, 5b)** mit einer ersten und einer zweiten Intensitätsmodulationsfrequenz **($f_b$, $f_a$)** beaufschlagt werden, deren Frequenzwerte sich durch eine Differenz unterscheiden.

6. Verfahren nach Anspruch 3 bis 5, **dadurch gekennzeichnet,** daß während der Periode einer durch die Differenz der Modulationsfrequenzen **($|f_a - f_b|$)** hervorgerufenen Schwebungsfrequenz (Ω), welche bevorzugt auf einige einhundert Hertz eingestellt wird, wenigstens dreimal pro Schwebungsperiode die mit den Detektoren des Detektorfeldes **(19)** gemessenen Strahlungsintensitätswerte **(<I>)** abgespeichert werden.

7. Verfahren nach Anspruch 1 oder 2, **dadurch gekennzeichnet,** daß die unterschiedlichen Strahlzustände durch eine relative optische Weglängenänderungen der beiden Teilstrahlen zueinander erzeugt werden.

8. Vorrichtung zur Bestimmung dreidimensionaler Strukturen im Submikrometerbereich gemäß einem Verfahren nach einem der Ansprüche 1 bis 7, mit

einem Strahlteiler **(4)** zum Aufteilen eines kohärenten Lichtstrahls **(3)** insbesondere eines Laserstrahls **(3)**, in zwei Teilstrahlen **(5a, 5b),**

einer Fokussierlinse **(23)** zur Fokussierung des ersten Teilstrahls **(5b, 11b, 21)** auf einen im Wellenlängenbereich der Strahlung liegenden Fokusdurchmesser **(24)** auf oder in das auszumessende Objekt **(1),**

einem mehrere voneinander unabhängig detektierende Detektoren aufweisenden Detektorfeld **(19),** auf dem der zweite **(14a)** mit dem vom Objekt **(1)** rückreflektierten ersten Teilstrahl **(25)** überlagerbar ist,

einer mit den Detektoren verbundenen Auswerteeinheit **(29)** mit mehreren ersten Speichern **(30)** für die von jedem der Detektoren gelieferten elektrischen Werte,

einer mit den ersten Speichern **(30)** verbundenen, ersten Recheneinheit **(31)** zur Ermittlung der komplexen Amplitude unter Zuhilfenahme der in den ersten Speichern **(30)** abgespeicherten Werte,

mehreren mit der ersten Recheneinheit **(31)** verbundenen zweiten Speichern **(33)** zur Speicherung der ermittelten komplexen Amplitudenwerte,

gekennzeichnet durch

eine mit den zweiten Speichern **(33)** verbundenen Multiplikatoreinheit **(35)** zur rechnerischen Multiplikation erster Phasenwerte ($\Phi$) der komplexen Amplitudenwerte mit einem eine gewünschte Vergrößerung der Objektstruktur des Objekts **(1)** bestimmenden Faktor,

mit der Multiplikationseinheit **(35)** verbundenen dritten Speichern (36) zur Speicherung der durch die Multiplikation erhaltbaren zweiten Phasenwerte,

eine mit den zweiten und den dritten Speichern **(33, 36)** verbundenen zweiten Recheneinheit **(37)** zur Bestimmung der vergrößerten Objektstruktur aus den zweiten Phasenwerten und den in den zweiten Speichern abgespeicherten Intensitätswerten mittels einem in der zweiten Recheneinheit **(37)** abgelegten Rechenalgorithmus,

und eine mit der zweiten Recheneinheit **(37)** verbundenen Ausgabeeinheit **(39),** auf der das von der zweiten Recheneinheit **(37)** ermittelte vergrößerte Objektbild bzw. hologrammartige Bild darstellbar ist.

9. Vorrichtung nach Anspruch 8, **gekennzeichnet durch** ein Frequenzverschiebungselement **(7a, 7b)** zur Verschiebung der Strahlungsfrequenz **($f_a$, $f_b$)** des einen Teilstrahls **(5a)** gegenüber derjenigen des anderen **(5b).**

10. Vorrichtung nach Anspruch 9, **dadurch gekennzeichnet,** daß mit dem Frequenzverschiebungselement **(7a, 7b)** die Intensität und/oder die Phase wenigstens eines der Teilstrahlen **(5a, 5b)** mit einer vorgegebenen Frequenz modulierbar ist, welches je einen akusto-optischen Modulator **(7a, 7b)** pro Teilstrahl **(5a, 5b)** aufweist, deren Modulationsfrequenzen sich um eine Differenzfrequenz von einigen einhundert Hertz unterscheiden, und bevorzugt die Auswerteeinheit **(29)** einen Taktgeber aufweist, der pro Differenzfrequenzperiode wenigstens dreimal die Detektoren aktiviert und deren Meßwerte in die ersten Speicher **(30)** einspeichert.

11. Vorrichtung nach Anspruch 9 oder 10, **gekennzeichnet durch** einen zweiten Strahlteiler/-vereiniger **(13)** und einen Strahlumlenker **(17a, 17b),** wobei der erste Teilstrahl **(5b, 11b, 21, 25)** durch die Fokussierlinse **(23)** auf das auszumessende Objekt **(1)** fokussierbar und vom Fokuspunkt **(24)** reflektierbar durch die Fokussierlinse **(23)** und den Strahlteiler **(13)** hindurch auf die Detektoren des Detektorfelds **(19)** strahlbar ist, der zweite Teilstrahl **(5a, 11a)** durch den zweiten Strahlteiler **(13)** hindurch mit dem Strahlumlenker **(17a, 17b)** zum zweiten Strahlteiler **(13)** auf den Ort des Durchtritts des ersten Strahls rückreflektierbar und mit diesem vereinbar auf die Detektoren des Detektorfelds **(19)** strahlbar ist.

**Claims**

1. Method for determining three-dimensional structures in the submicron range, wherein

a coherent beam (3), in particular a laser beam, is split into two partial beams (5a, 11a, 14a; 5b, 11b, 21),

the first partial beam (5b, 11b, 21) is focused onto an object (1) to be structurally measured with a focal diameter that is approximately one wavelength of the radiation,

the radiation (25) reflected back by the focusing lens (23) is superimposed on the radiation of the second partial beam (5a, 11a, 14a) in a detector field (19) containing a plurality of independent detectors, and

the position-dependent radiation intensity values (<I>) for at least three different beam states of at least one of the two partial beams (5a, 11a, 14a; 5b, 11b, 21) on the detectors are converted by the latter into analog electrical signals and stored,

respective complex amplitude values with first phase values ($\Phi$) of the local wave field at the position of the detectors are determined from these stored values, characterised in that second phase values are computationally formed from the determined first phase values by multiplication by a predetermined value, and

a hologram-like image containing the magnified object structure is generated using these second phase values, the intensity values of the complex amplitude values stored in first memories, and the position coordinates of the respective detectors.

2. Method according to claim 1, characterised in that a second image information of a directly observable second image representing the enlarged object structure is calculated from the image information of the hologram-like image containing the enlarged object structure using a two-dimensional Fourier transform and a predetermined computational algorithm.

3. Method according to claim 1 or 2, characterised in that time-dependent radiation intensity values (<I>) generating different beam states on the detectors are formed.

4. Method according to claim 3, characterised in that in order to form different beam states the radiation frequency $f_b$) of the first partial beam (11b, 21, 25) is shifted by one frequency value relative to the radiation frequency ($f_a$) of the second partial beam (11a, 14a), which permits in particular a processing by means of electronic components.

5. Method according to claim 4, characterised in that both partial beams (5a, 5b) are subjected to a first and a second intensity modulation frequency ($f_b$, $f_a$) whose frequency values differ by one frequency difference.

6. Method according to claims 3 to 5, characterised in that during the period of one beat frequency ($\Omega$) produced by the difference in the modulation frequencies ( I$f_a$, $f_b$ I), which is preferably adjusted to a few hundred Hertz, the radiation intensity values (<I>) measured with the detectors of the detector field (19) are stored at least three times during each beat period.

7. Method according to claim 1 or 2, characterised in that the different radiation states are produced by a relative optical path length change of the two partial beams with respect to one another.

8. Apparatus for determining three-dimensional structures in the submicron range in accordance with a method according to one of claims 1 to 7, with

a beam splitter (4) for splitting a coherent light beam (3), in particular a laser beam (3), into two partial beams (5a, 5b),

a focusing lens (23) for focusing the first partial beam (5b, IIb, 21) onto a focal diameter (24) lying in the wavelength range of the radiation or onto the object to be measured (1),

a detector field (19) containing a plurality of mutually independent detecting detectors, on which field the second partial beam (14a) can be superimposed onto the first partial beam (25) reflected back from the object (1),

an evaluating unit (29) connected to the detectors with a plurality of first memories (30) for the electrical values supplied by each of the detectors,

a first computing unit (31) connected to the first memories (30) for determining the complex amplitude with the aid of the values stored in the first memories (30),

with a plurality of second memories (33) connected to the first computing unit (31), for storing the determined complex amplitude values, characterised by

a multiplication unit (35) connected to the second memories (33) for the computational multiplication of first phase values ($\Phi$) of the complex amplitude values by a factor determining a desired magnification of the object structure of the object (1),

with third memories (36) connected to the multiplication unit (35) for storing the second phase values obtainable by the multiplication,

a second computing unit (37) connected to the second and third memories (33, 36) for determining the enlarged object structure from the second phase values and from the intensity values stored in the second memories by means of a computational algorithm stored in the second computing unit (37),

and an output unit (39) connected to the second computing unit (37), on which can be displayed the enlarged object image or hologram-like image determined by the second computing unit (37).

9. Apparatus according to claim 8, characterised by a frequency shift element (7a, 7b) for shifting the radiation frequency ($f_a$, $f_b$) of one partial beam (5a) relative to the radiation frequency of the other partial beam (5b).

10. Apparatus according to claim 9, characterised in that the intensity and/or the phase of at least one of the partial beams (5a, 5b) can be modulated with a predetermined frequency by means of the frequency shift element (7a, 7b), wherein the element has an acousto-optical modulator (7a, 7b) for each partial beam (5a, 5b), whose modulation frequencies differ by a difference frequency of a few hundred Hertz, and preferably the evaluating unit (29) has a pulse generator that activates the detectors at least three times during each difference frequency period and whose measurement values are stored in the first memories (30).

11. Apparatus according to claim 9 or 10, characterised by a second beam splitter/combiner (13) and a beam deflector (17a, 17b), wherein the first partial beam (5b, 11b, 21, 25) can be focused by the focusing lens (23) onto the object (1) to be measured and reflected from the focal point (24) and transmitted through the focusing lens (23) and the beam splitter (13) onto the detectors of the detector field (19), and the second partial beam (5a, 11a) can be reflected back through the second beam splitter (13) with the beam deflectors (17a, 17b) at the second beam splitter (13) onto the point of entry of the first beam and can be combined with the latter and focused onto the detectors of the detector field (19).

**Revendications**

1. Procédé pour la détermination de structures tridimensionnelles dans le domaine inférieur au micromètre, dans lequel

un faisceau cohérent (3), en particulier un faisceau laser, est divisé en deux faisceaux partiels (5a, 11a, 14a ; 5b, 11b, 21),
le premier faisceau partiel (5b, 11b, 21) est focalisé sur un objet structurel à mesurer (1) avec un diamètre de foyer correspondant à environ une longueur d'onde du rayonnement,
le rayonnement (25) rétroréfléchi par la lentille de focalisation (23) est superposé au rayonnement du deuxième faisceau partiel (5a, 11a, 14a) sur un ensemble de détecteurs (19) comportant plusieurs détecteurs indépendants les uns des autres et
les valeurs d'intensité du rayonnement en fonction du lieu (<I>) pour au moins trois états différents d'au moins un des deux faisceaux partiels (5a, 11a, 14a ; 5b, 11b, 21) sur les détecteurs sont trans-formées par ceux-ci en signaux électriques analogiques, et mémorisées,
à partir de ces valeurs mémorisées, les valeurs d'amplitude complexes respectives avec les premières valeurs de phase ($\Phi$) du champ d'onde local sont déterminées à l'emplacement des détecteurs,

caractérisé en ce que,

à partir des premières valeurs de phase déterminées, des deuxièmes valeurs de phases sont établies par calcul au moyen d'une multiplication par une valeur prédéterminée et

avec ces deuxièmes valeurs de phase, les valeurs d'intensité mémorisées dans des premières mémoires des valeurs complexes d'amplitude et les coordonnées d'emplacement des détecteurs respectifs, une image analogue à un hologramme contenant la structure de l'objet agrandie est produite.

2. Procédé selon la revendication 1, caractérisé en ce qu'à partir de l'information de l'image analogue à un hologramme contenant la structure de l'objet agrandie, une deuxième information d'une deuxième image, pouvant être directement visualisée, représentant la struc-ture d'objet agrandie, est calculée en utilisant une trans-formation de Fourier bidimensionnelle et un formalisme de calcul prédéterminé.

3. Procédé selon la revendication 1 ou 2, caractérisé en ce que sont formés des états différents de faisceaux produisant des valeurs d'intensité de rayonnement dépendant du temps (<I>) sur les détecteurs.

4. Procédé selon la revendication 3, caractérisé en ce que, pour la formation d'états de faisceaux différents, la fréquence du rayonnement ($f_b$) du premier faisceau partiel (11b, 21, 25) est décalée par rapport à celle ($f_a$) du deuxième faisceau partiel (11a, 14a), d'une valeur de fréquence qui permet en particulier un traitement avec des groupes de composants électroniques.

5. Procédé selon la revendication 4, caractérisé en ce que les deux faisceaux partiels (5a, 5b) sont modulés par une première et une deuxième fréquences de modulation d'intensité ($f_b$, $f_a$), dont les valeurs de fréquence sont différentes.

6. Procédé selon les revendications 3 à 5, caractérisé en ce que, pendant la période de la fréquence de battement ($\Omega$) produite par la différence des fréquences de modulation ($|f_a - f_b|$), laquelle est ajustée de préférence à quelque centaines de hertz, les valeurs d'intensité de rayonnement (<I>) mesurées avec les détecteurs de l'ensemble de détecteurs (19) sont mémorisées au moins trois fois par période de battement.

7. Procédé selon la revendication 1 ou 2, caractérisé en ce que, les états différents de faisceaux sont produits par une modification des longueurs de chemin optique relatives des deux faisceaux partiels l'un par rapport à l'autre.

8. Dispositif pour la détermination de structures tridimensionnelles dans le domaine inférieur au micromètre conformément au procédé selon l'une quelconque des revendications 1 à 7, comportant

un diviseur de faisceau (4) pour diviser un faisceau lumineux cohérent (3), en particulier un faisceau laser (3), en deux faisceaux partiels (5a, 5b),

une lentille de focalisation (23) pour focaliser le premier faisceau partiel (5b, 11b, 21) sur un diamètre de foyer se trouvant dans la plage des longueurs d'onde du rayonnement (24) sur ou dans l'objet à mesurer (1),

un ensemble de détecteurs (19), comportant plusieurs détecteurs mis en oeuvre indépendamment l'un de l'autre, sur lequel le deuxième faisceau partiel (14a) est superposable au premier faisceau partiel rétroréfléchi (25) par l'objet (1),

une unité d'évaluation (29) liée aux détecteurs, ayant plusieurs premières mémoires (30) pour les valeurs électriques délivrées par chacun des détecteurs,

une première unité de calcul (31) liée aux premières mémoires (30) pour déterminer les amplitudes complexes grâce aux valeurs mémorisées dans les premières mémoires (30),

plusieurs deuxièmes mémoires (33) liées à la première unité de calcul (31), pour mémoriser les amplitudes complexes déterminées,

caractérisé par

une unité multiplicatrice (35), liée aux deuxièmes mémoires (33) pour multiplier par un calculateur des premières valeurs de phase ($\Phi$) des valeurs d'amplitude complexes par un facteur déterminant un agrandissement souhaité de la structure de l'objet (1),

des troisièmes mémoires (36) étant liées à l'unité multiplicatrice (35) pour mémoriser les deuxièmes valeurs de phase pouvant être obtenues par la multiplication,

une deuxième unité de calcul (37), liée aux deuxièmes et aux troisièmes mémoires (33, 36) pour déterminer la structure de l'objet agrandie à partir des deuxièmes valeurs de phase et des valeurs d'intensité mémorisées dans les deuxièmes mémoires au moyen d'un algorithme de calcul chargé dans la deuxième unité de calcul (37),

et une unité de sortie (39), liée à la deuxième unité de calcul (37), sur laquelle l'image de l'objet agrandie, communiquée par la deuxième unité de calcul (37) ou l'image analogue à un hologramme, peuvent être représentées.

9. Dispositif selon la revendication 8, caractérisé par un élément de décalage de fréquence (7a, 7b) pour décaler la fréquence du rayonnement ($f_a$, $f_b$) d'un des faisceaux partiels (5a) par rapport à celle de l'autre (5b).

10. Dispositif selon la revendication 9, caractérisé en ce qu'avec l'élément de décalage de fréquence (7a, 7b) l'intensité et/ou la phase d'au moins un des faisceaux partiels (5a, 5b) est modulable avec une fréquence prédéterminée, cet élément comportant respectivement un modulateur acousto-optique (7a, 7b) par faisceau partiel (5a, 5b), dont les fréquences de modulation diffèrent d'une fréquence de quelque centaines de hertz, l'unité d'évaluation (29) comportant de préférence une horloge, qui active les détecteurs au moins trois fois par période de la fréquence de différence et qui mémorise leurs valeurs de mesure dans les premières mémoires (30)

11. Dispositif selon la revendication 9 ou 10, caractérisé par un deuxième diviseur/concentrateur de faisceau (13) et un déflecteur de faisceau (17a, 17b), dans lequel le premier faisceau partiel (5b, 11b, 21, 25) peut être focalisé par la lentille de focalisation (23) sur l'objet à mesurer (1) et réfléchi du point focal (24), puis dirigé par la lentille de focalisation (23) et le diviseur de faisceau (13) en les traversant sur les détecteurs de l'ensemble de détecteurs (19), le deuxième faisceau partiel (5a, 11a) traversant le deuxième diviseur de faisceau (13) pouvant être rétroréfléchi avec le déflecteur de faisceau (17a, 17b) vers le deuxième diviseur de faisceau (13) sur le lieu de traversée du premier faisceau et pouvant être réuni à celui-ci et dirigé sur les détecteurs de l'ensemble de détecteurs (19).

EP 0 815 411 B1

Fig. 1

Fig. 2

Fig. 3

Fig. 4